# FASCICULE DE BREVET EUROPEEN

(11) **EP 1 076 274 B1**
(45) Date de publication et mention de la délivrance du brevet: **18.02.2004**
(21) Numéro de dépôt: 00402282.8
(22) Date de dépôt: 11.08.2000
(51) Int. Cl.: G05B 19/042, G05B 19/418

(54) **Procédé de configuration d'un système bâti autour d'au moins un réseau numérique et comportant au moins un composant intelligent analogique ou tout-ou-rien**
Verfahren zur Konfiguration eines Systems, welches aus mindestens einem digitalem Netzwerk aufgebaut ist, und welches mit mindestens einem analogen oder schaltenden intelligenten Bauteil versehen ist
Process for the configuration of a system structured around at least a digital network, and including, at least an either analog or on-off intelligent component

(30) Priorité: 13.08.1999 FR 9910497
(43) Date de publication de la demande: 14.02.2001
(73) Titulaire: Crouzet Automatismes, 26000 Valence (FR)
(72) Inventeur: Chatenay, Alain, 94117 Arcueil Cedex (FR)
(74) Mandataire: Chaverneff, Vladimir

(56) Documents cités:
- EP-A- 0 612 004
- WO-A-97/29409
- WO-A-99/36841
- US-A- 5 371 859
- US-A- 5 712 980

## Description

La présente invention se rapporte à un procédé de configuration d'un système bâti autour d'au moins un réseau numérique et comportant au moins un composant intelligent analogique ou tout-ou-rien. Les systèmes auxquels se réfère l'invention sont des systèmes comportant des composants intelligents tels que des automates et/ou des activateurs et/ou des capteurs reliés à au moins un bus numérique, qui peut être filaire ou optique ou hertzien, au moins un calculateur étant relié à ce bus. Ce calculateur assure le "contrôle- commande" du système, à savoir le pilotage et/ou la supervision et/ou la surveillance et/ou le diagnostic et/ou la prédiction du fonctionnement futur de ce système, ainsi que toutes opérations demandées ponctuellement par ses utilisateurs.

Un tel système peut, par exemple, être une installation industrielle (chaîne de fabrication ou de traitement, triage d'objets,...) ou l'installation électrique et électromécanique d'un véhicule terrestre, maritime ou aérien.

Dans un système du type précité, lorsque l'on en modifie les caractéristiques (en particulier adjonction d'un nouveau composant tel qu'un automate ou remplacement d'un tel composant par un autre de type différent, ...) il faut généralement faire appel à un spécialiste de ces composants et/ou à un spécialiste du logiciel fonctionnant sur le calculateur du système, afin de déterminer les modifications à apporter à ce logiciel pour qu'il reconnaisse le nouveau composant, le prenne en compte et le fasse fonctionner correctement. En général, l'intervention se borne à la modification du logiciel et éventuellement à celle de la fréquence d'échantillonnage, sans optimiser le fonctionnement du nouveau composant en fonction de ses caractéristiques physiques.

La présente invention a pour objet un procédé de configuration d'un système du type précité, qui permette, lors de l'adjonction ou de la modification d'au moins un composant, de configurer de façon optimale ce système, et ce, avec le minimum possible d'intervention de l'utilisateur et sans nécessiter de connaissance particulière des caractéristiques des composants de sa part, ce procédé devant permettre une reconnaissance sans ambiguïté des composants ajoutés ou modifiés.

Le procédé de l'invention, pour la configuration d'un système bâti autour d'au moins un réseau numérique et comportant au moins un composant intelligent analogique ou fonctionnant en tout-ou-rien est caractérisé en ce que lors de l'inclusion d'un composant nouveau ou modifié, un configurateur accède aux données caractérisant toutes les valeurs lues et écrites sur le réseau par ce composant au sens physique relatif au controle- commande, en plus des données habituellement transmises sur le réseau numérique. Ces données caractérisantes sont : la fréquence ou la période d'échantillonnage de ces valeurs, et, pour les valeurs numériques correspondant à des grandeurs analogiques, les types de ces grandeurs et la nature de leur précision.

La présente invention sera mieux comprise à la lecture de la description détaillée d'un mode de mise en oeuvre, pris à titre d'exemple non limitatif et illustré par le dessin annexé, dont la figure unique est un bloc-diagramme partiel d'un système dans lequel peut être mis en oeuvre le procédé de l'invention.

La présente invention est décrite ci-dessous en référence à un système d'automatisme industriel, mais il est bien entendu qu'elle n'est pas limitée à cette seule application, et qu'elle peut être mise en oeuvre dans de nombreux autres domaines pour lesquels les composants des systèmes comportent au moins une sortie et/ou une entrée analogique et/ou en tout-ou-rien. De tels composants peuvent êtres des capteurs, des électrovannes, des automates, des moteurs, des appareils indicateurs, etc...

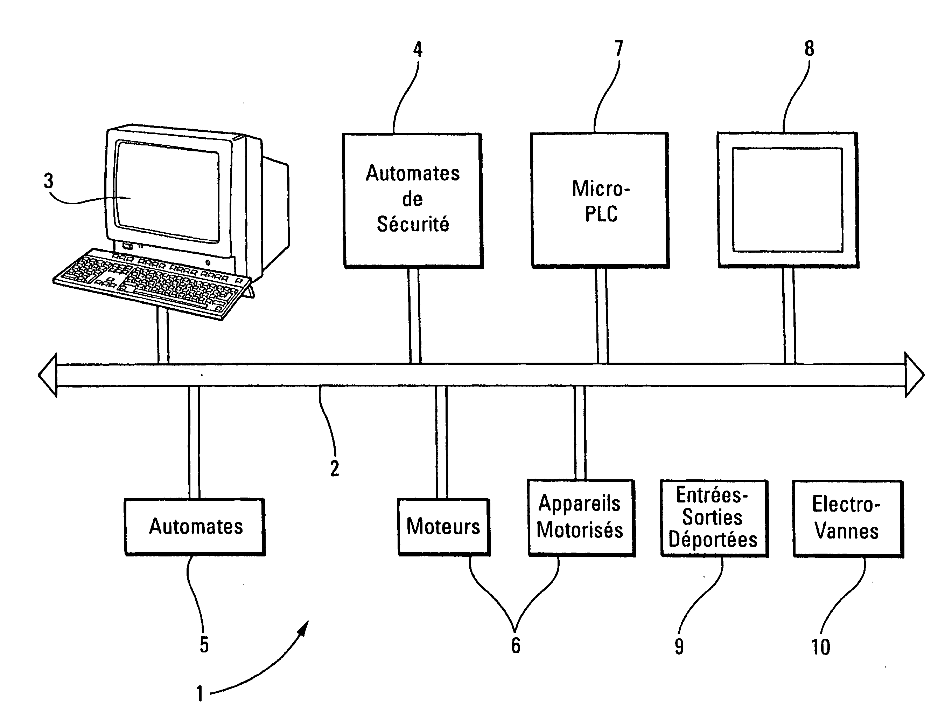

On a représenté en figure 1 le bloc diagramme partiel d'un système 1 formé autour d'un réseau numérique, qui est dans le cas présent un bus numérique 2, qui est, par exemple, à protocole " Can Open", mais il est bien entendu que tout autre type de bus numérique conviendrait.

Ce système comporte, par exemple : un calculateur 3 (micro-ordinateur de type PC,...), des automates de sécurité 4, des automates simples 5, des appareils motorisés 6, des entrées/sorties standard, c'est à dire des micro-automates programmables 7 (connus sous la dénomination micro-PLC"), des panneaux d'affichage déportés 8, des entrées/sorties déportées 9 et des électrovannes 10.

Tous les composants d'automatisme cités ci-dessus peuvent exécuter un traitement local (qui peut être rudimentaire ou élaboré). Tous ces composants communiquent entre eux en envoyant des données sur le bus 2 et/ou en recevant des données y circulant. Ces données peuvent être numériques ou booléennes (tout ou rien). Chacune de ces données peut être accompagnée lors de son transit sur le bus numérique d'un identificateur, par exemple une adresse s'il s'agit d'un protocole "Modbus", ou bien un identificateur pur pour un protocole "Can", ou bien encore une combinaison d'identificateurs pour le protocole TCP/IP....Cet identificateur permet de caractériser de façon unique la donnée correspondante, au niveau de chaque composant. Tous ces composants interagissent entre eux pour former un ou plusieurs systèmes d'automatisme qui peuvent être indépendants.

Il est important de noter que le logiciel embarqué dans chaque composant doit, avant tout, respecter les lois physiques qui régissent la discrétisation du temps et des grandeurs relatives à ces composants (grandeurs d'entrée et/ou de sortie de ces composants).

La discrétisation du temps oblige l'ensemble des algorithmes de contrôle-commande de chaque système, donc des logiciels numériques qui les implémentent, à respecter l'application du théorème de Shannon à chacun de signaux d'entrée et de sortie utilisés par ce logiciel. Selon ce théorème, la fréquence d'échantillonnage d'un signal quelconque variant au cours du temps, doit être au moins égale à deux fois la fréquence maximale du spectre fréquentiel de ce signal. En pratique, on choisit une fréquence d'échantillonnage égale à 3 à 10 fois la fréquence maximale du spectre.

La discrétisation des grandeurs physiques, leur représentation informatique (taille limitée à 8,16,32,64 bits ...selon le logiciel ) et la représentation interne binaire ou le codage spécifique par champs spécialisés ou en valeurs à virgule flottante (comme par exemple selon la norme IEEE 754) imposent une perte de précision entre la valeur physique analogique mesurée et la valeur numérisée telle que traitée par l'algorithme numérique. Cette perte de précision est due, d'abord, au manque de précision ou à la résolution insuffisante du capteur délivrant cette valeur, puis au circuit électronique analogique qui calibre et traite le signal issu du transducteur du capteur pour le présenter au convertisseur analogique/numérique du composant ou du système, et à la capacité de ce convertisseur (largeur, en nombre de bits, des mots de sortie du convertisseur). Enfin, dans le cours des calculs numériques, la limitation de la représentation des nombres fait varier la précision des résultats en fonction de la nature des opérations effectuées. Les résultats évoluent entre une valeur minimum et une valeur maximum admissibles qui dépendent soit de la grandeur physique mesurée (dans le cas d'un capteur), soit de celle correspondant à une commande (dans le cas d'un moteur, d'un actionneur, d'une vanne...), soit des calculs effectués par l'algorithme numérique.

Les composants peuvent aussi échanger des données en tout-ou-rien, c'est-à-dire ne pouvant avoir que deux valeurs (vrai ou faux), ou bien encore des données alphanumériques (par exemple telles que celles affichées par les panneaux 8), représentant des chaînes de caractères de longueur quelconque. Tous les autres types de données, plus rarement utilisés dans les algorithmes numériques, sont des combinaisons des types de base précités.

La présente invention se propose de décrire, dans une table de données relative à chaque composant un ensemble d'informations caractérisant totalement, au sens physique (et non pas au sens informatique, qui est insuffisant) les données lues ou écrites sur le bus numérique 2. Elle se propose également de décrire les actions permettant au configurateur du système (configurateur qui peut être soit une machine, soit une personne) d'établir un dialogue en ligne (dans le cas d'automatismes non sûrs) ou hors-ligne (pour des automatismes sûrs) les composants entre eux tout en vérifiant, du point de vue physique, la cohérence de ces couplages, c'est à dire si toutes les caractéristiques des données circulant, via le bus 2, entre les composants, sont identiques ou compatibles. Ces caractéristiques sont en particulier: la fréquence d'échantillonnage (des grandeurs analogiques ou tout-ou-rien), le type de ces données (donnée exprimée avec virgule fixe ou flottante, donnée booléenne), et leur précision (relative ou absolue) lorsqu'elles sont d'origine analogique.

La présente invention concerne en particulier les informations échangées entre le configurateur et les composants "intelligents" lorsque ceux-ci se sont fait reconnaître du configurateur, le processus de reconnaissance étant propre au protocole d'échanges sur le bus 2. La reconnaissance et la configuration peuvent être déclenchées sur interrogation par le configurateur si elles se font hors ligne (à froid), ou sur réaction du configurateur lors de l'émission automatique des informations de présence émises par le composant lors de sa connexion si cette dernière se fait en ligne (à chaud). Dans le détail, ces actions sont les suivantes.

Chaque nouveau composant connecté au bus transmet, dès qu'il a été détecté ou dès qu'il s'est signalé au configurateur, la valeur de la période d'échantillonnage de toutes les grandeurs qu'il veut soit écrire sur le bus 2, soit lire sur ce bus. Ainsi le configurateur (personne, telle qu'un ingénieur-système, et/ou machine) est en mesure de comparer toutes les périodes d'exécution et les périodes d'échantillonnage de toutes les données traitées par chaque composant et pouvant transiter sur le bus numérique et d'établir un dialogue entre les composants numériques connectés au bus numérique. Il est alors en mesure de constituer un nouveau système d'automatisme distribué dont tous les composants peuvent communiquer sur le bus numérique.

Ensuite, pour chaque composant, le configurateur rapatrie ou accède à la liste de toutes les données décrites ci-dessus, données qui sont susceptibles d'être échangées sur le bus numérique.

A partir de cet instant :
■ Soit, l'utilisateur peut, sous contrôle du configurateur, construire son système d'automatisme en inscrivant dans le dictionnaire des données de chaque composant l'identificateur d'une donnée écrite par un composant dans l'emplacement réservé de la description de données lues par un ou plusieurs autres composants.
■ Soit, le configurateur, après contrôle de cohérence au sens de la sémantique des automatismes et du contrôle-commande, va pouvoir automatiquement relier des données de même définition ou de définition compatible en recopiant l'identificateur d'une donnée écrite par un composant dans l'emplacement réservé de la description de données lues par un ou plusieurs autres composants.

Les actions de contrôle de cohérence menées par le configurateur sont les suivantes :
■ Une donnée lue ne peut être mise en rapport qu'avec une donnée écrite. Une donnée utilisée en local ne peut être envoyée sur le bus dans le cadre du système d'automatisme courant. L'utilisateur et son configurateur peuvent ainsi, dans un système donné, protéger en local une donnée d'un composant à usages multiples.
■ Pour chaque couple de données qui doivent êtres mises en rapport, il vérifie la cohérence des modes d'échanges de l'écriture et prévus pour la lecture :
   ■ Si les deux modes sont identiques ou si un mode d'écriture est cyclique et le mode de lecture est asynchrone, alors cette étape est correcte.
   ■ Sinon, si l'écriture est asynchrone ou aléatoire et si en lecture on attend un mode cyclique : le configurateur signal une incohérence grave à l'utilisateur qui, soit interdit une telle connexion entre ces deux données, soit prend ses décisions justifiées en connaissance de cause (par exemple : données asynchrones mais fréquentes en mode écriture, et lectures à très longue période compatible avec l'écart moyen entre deux écritures).
■ Pour chaque couple de données qui doivent être mises en rapport et dont les deux modes d'échanges sont de type cyclique, il vérifie la cohérence des périodes d'échanges de l'écriture et prévues pour la lecture.
   ■ Si les périodes d'échange des deux données sont identiques alors cette étape est correcte.
   ■ Si la période d'échange de la donnée écrite est supérieure à celle de la donnée lue: le configurateur signale une incohérence mineure (pour des données analogiques : sous-échantillonnage à la lecture, donc perte possible de dynamique du signal à la lecture) à l'utilisateur qui soit interdit une telle connexion entre ces deux données, soit prend ses décisions justifiées en connaissance de cause (soit tolérer le fait, soit reprogrammer les algorithmes du récepteur en fonction des critères de contrôle- commande du système et du composant).
   ■ Si la période d'échange de la donnée écrite est inférieure à celle de la donnée lue : le configurateur signale une incohérence mineure (pour des données analogiques : sur-échantillonnage à la lecture, donc introduction possible de bruit logiciel par lecture de variations du signal à plus haute fréquence) à l' utilisateur qui soit interdit une telle connexion entre ces deux données, soit prend ses décisions jusitfiées en connaissance de cause. (soit tolérer le fait, soit reprogrammer les algorithmes du récepteur en fonction des critères de contrôle-commande système et du composant, par exemple en rajoutant pour des données analogiques un filtre numérique passe-bas après la lecture de l'entrée).
■ Pour chaque couple de données qui doivent être mises en rapport et dont les deux modes d'échanges sont de type cyclique et cohérents, il vérifie la cohérence des types de données écrites et lues.
   ■ Si les types des deux données sont identiques alors cette étape est correcte.
   ■ Si les types des deux données sont différents : le configurateur signale une incohérence majeure à l'utilisateur qui soit interdit une telle connexion entre ces deux données, soit prend ses décisions justifiées en connaissance de cause (reprogrammer les algorithmes du récepteur en fonction des critères de contrôle-commande système et du composant en introduisant les conversions nécessaires).
■ Pour chaque couple de données de type chaîne de caractères qui doivent être mises en rapport et dont les deux modes d'échanges sont de type cyclique et cohérents, il vérifie la cohérence des tailles des chaînes de données écrites et lues.
   ■ Si les tailles des deux données sont identiques, alors cette étape est correcte.
   ■ Si les tailles des deux données sont différentes : le configurateur signale une incohérence majeure à l'utilisateur qui soit interdit une telle connexion entre ces deux données, soit prend ses décisions justifiées en connaissance de cause (reprogrammer les algorithmes du récepteur en fonction des critères de contrôle-commande du système et du composant en introduisant les conversions nécessaires).
■ Pour chaque couple de données de type analogique qui doivent être mises en rapport et dont les deux modes d'échanges sont de type cyclique et cohérent, il vérifie la cohérence des systèmes dans lesquels sont exprimées les unités (en général unités MKSA) des données écrites et lues.
   ■ Si les unités des deux données sont identiques, alors cette étape est correcte;
   ■ Si les unités des deux données sont différentes : le configurateur signale une incohérence majeure à l'utilisateur qui soit interdit une telle connexion entre ces deux données, soit prend ses décisions justifiées en connaissance de cause (reprogrammer les algorithmes du récepteur en fonction des critères de contrôle-commande du système et du composant).
■ Pour chaque couple de données de type analogique de même système d'unités (MKSA), qui doivent être mises en rapport et dont les deux modes d'échanges sont de type cyclique et cohérent : il vérifie la cohérence des puissances de 10 des données écrites et lues.
   ■ Si les puissances de 10 des deux données sont identiques, alors cette étape est correcte;
   ■ Si les puissances de 10 des deux données sont différentes, le configurateur signale une incohérence majeure à l'utilisateur qui soit interdit une telle connexion entre ces deux données, soit prend ses décisions justifiées en connaissance de cause (reprogrammer les algorithmes du récepteur en fonction des critères de contrôle-commande système et du composant).
■ Pour chaque couple de données de type analogique, de même système d'unités (MKSA) et de même puissance 10 qui doivent être mises en rapport et dont les deux modes d'échanges sont de type cyclique et cohérents : il vérifie la cohérence des précisions des données écrites et lues.
   ■ Si les précisions des deux données sont identiques, alors cette étape est correcte.
   ■ Si la précision de la donnée écrite est supérieure à celle de la donnée lue: le configurateur signale une incohérence majeure (sous-précision à la lecture) à l'utilisateur qui soit interdit une telle connexion entre ces deux données, soit prend ses décisions justifiées en connaissance de cause (soit introduire des conversions appropriées après lecture de données, soit reprogrammer les algorithmes du récepteur en fonction des critères de contrôle-commande du système et du composant pour éviter soit une imprécision globale des résultats calculés à partir de cette donnée, soit une mise en instabilité totale d'un contrôle/commande par introduction d'échelons parasites).
   ■ Si la précision de la donnée écrite est inférieure à celle de la donnée lue : le configurateur signale une incohérence majeure (sur-précision à la lecture) à l'utilisateur qui soit interdit une telle connexion entre ces deux données, soit prend ses décisions justifiées en connaissance de cause, (soit introduire des conversions appropriées après lecture de données, soit reprogrammer les algorithmes du récepteur en fonction des critères de contrôle-commande du système et du composant, pour éviter une introduction de bruit logiciel de fréquence supérieure au spectre du signal lu qui peut engendrer une mise en instabilité totale d'un processus de contrôle-commande.
■ Pour chaque couple de données de type analogique, de même système d'unités (MKSA), de même puissance de 10 et de même précision, qui doivent être mises en rapport et dont les deux modes d'échanges sont de type cyclique et cohérents, il vérifie la cohérence des valeurs minimale et maximale des données écrites et lues.
   ■ Si les valeurs des deux données sont identiques alors cette étape est correcte.
   ■ Si l'intervalle minimum-maximum de la donnée écrite est inclus dans l'intervalle minimum-maximum de la donnée lue : alors cette étape est correcte.
   ■ Si l'intervalle minimum-maximum de la donnée lue est inclus dans l'intervalle minimum -maximum de la donnée écrite: le configurateur signale une incohérence mineure (risque de débordement de la donnée lue dans l'algorithme du composant récepteur) à l'utilisateur qui, soit interdit une telle connexion entre ces deux données, soit prend ses décisions jusitfiées en connaissance de cause (soit tolérer le fait, soit introduire des détections de débordement avec réactions appropriées au système ou au composant concerné).
   ■ Si les intervalles minimum-maximum de la donnée lue et de la donnée écrite sont disjoints, le configurateur signale une incohérence majeure (incompatibilité des domaines de variations des données) à l'utilisateur qui soit interdit une telle connexion entre ces deux données, soit prend ses décisions justifiées en connaissance de cause (reprogrammer le composant récepteur).

Bien entendu, le configurateur et l'utilisateur peuvent s'appuyer sur des fonctions de conversion, placées implicitement dans les composants d'automatismes qui sont transparents dans le cas de cohérence et qui, dans les cas acceptables d'incohérence, effectuent les conversions de données entre lecture sur bus numérique et exploitation dans l'algorithme du composant récepteur.

Le procédé de l'invention est applicable à tous les composants d'automatismes intelligents connectés sur un bus numérique quel que soit le protocole d'échange. Bien sûr, l'implémentation des fonctionnalités offertes (connexion automatique, conversions automatiques en ligne, complétude des tables de description des données utilisés, configurateur en ligne ou hors ligne...) dépend des capacités de traitement des composants (mémoire disponible et puissance de calcul), mais est compatible de tout mécanisme de sécurité tel que défini actuellement dans le cadre des travaux du "BiA" de "Can Open" ou de l'« INRS ».

## Revendications

1. Procédé de configuration d'un système bâti autour d'au moins un réseau numérique (2) et comportant au moins un composant intelligent analogique (4 à 7 et 9) ou tout-ou-rien (10), **caractérisé en ce que** lors de l'inclusion d'un composant nouveau ou modifié, un configurateur accède aux données caractérisant toutes les valeurs lues et écrites sur le réseau par ce composant au sens physique relatif au controle- commande, en plus des données habituellement transmises sur le réseau numérique.

2. Procédé selon la revendication 1, **caractérisé en ce que** les données auxquelles on accède sont : la fréquence ou la période d'échantillonnage de ces valeurs, et pour les valeurs numériques correspondant à des grandeurs analogiques, les types d'expression de ces grandeurs ,à savoir booléenne ou à virgule fixe ou flottante, et la nature de leur précision, à savoir absolue ou relative.

3. Procédé selon la revendication 1 ou 2, **caractérisé en ce que** le configurateur vérifie la mise en rapport d'une donnée lue et d'une donnée écrite.

4. Procédé selon l'une des revendications précédentes, **caractérisé en ce que** le configurateur, pour chaque couple de données qui doivent êtres mises en rapport, vérifie la cohérence des modes d'échanges de l'écriture et prévus pour la lecture.

5. Procédé selon l'une des revendications précédentes, **caractérisé en ce que** le configurateur, pour chaque couple de données qui doivent être mises en rapport et dont les deux modes d'échanges sont de type cyclique, vérifie la cohérence des périodes d'échanges de l'écriture et prévues pour la lecture.

6. Procédé selon l'une des revendications précédentes, **caractérisé en ce que** le configurateur, pour chaque couple de données qui doivent être mises en rapport et dont les deux modes d'échanges sont de type cyclique et cohérents, vérifie la cohérence des types de données écrites et lues.

7. Procédé selon l'une des revendications précédentes, **caractérisé en ce que** le configurateur, pour chaque couple de données de type chaîne de caractères qui doivent être mises en rapport et dont les deux modes d'échanges sont de type cyclique et cohérents, vérifie la cohérence des tailles des chaînes de données écrites et lues.

8. Procédé selon l'une des revendications précédentes, **caractérisé en ce que** le configurateur, pour chaque couple de données de type analogique qui doivent être mises en rapport et dont les deux modes d'échanges sont de type cyclique et cohérent, vérifie la cohérence des systèmes dans lesquels sont exprimées les unités des données écrites et lues.

9. Procédé selon l'une des revendications précédentes, **caractérisé en ce que** le configurateur, pour chaque couple de données de type analogique de même système d'unités qui doivent être mises en rapport et dont les deux modes d'échanges sont de type cyclique et cohérent, vérifie la cohérence des puissances de 10 des données écrites et lues.

10. Procédé selon l'une des revendications précédentes, **caractérisé en ce que** le configurateur, pour chaque couple de données de type analogique, de même système d'unités et de même puissance 10 qui doivent être mises en rapport et dont les deux modes d'échanges sont de type cyclique et cohérents, vérifie la cohérence des précisions des données écrites et lues.

11. Procédé selon l'une des revendications précédentes, **caractérisé en ce que** le configurateur, pour chaque couple de données de type analogique, de même système d'unités , de même puissance de 10 et de même précision, qui doivent être mises en rapport et dont les deux modes d'échanges sont de type cyclique et cohérents, vérifie la cohérence des valeurs minimale et maximale des données écrites et lues.

## Patentansprüche

1. Verfahren zur Konfiguration eines Systems, das aus mindestens einem digitalen Netzwerk (2) aufgebaut ist, und das mit mindestens einem analogen (4 bis 7 und 9) oder schaltenden (10) intelligenten Bauteil versehen ist, **dadurch gekennzeichnet, dass** bei der Zufügung eines neuen oder modifizierten Bauteils ein Konfigurator zusätzlich zu üblicherweise auf dem digitalen Netzwerk übertragene Daten auf Daten zugreift, die die in dem Netz durch dieses Bauteil auf dem Netzwerk gelesenen und geschriebenen Werte im physikalischen Sinn die Kontroll-Steuerung betreffend charakterisieren.

2. Verfahren nach Anspruch 1, **dadurch gekennzeichnet, dass** die Daten, auf die zugegriffen wird, folgende sind: die Abtastfrequenz oder -periode dieser Werte und für die den analogen Größen entsprechenden digitalen Werte die Ausdrucksarten dieser Größen, das heißt boolesch, oder mit Fest- oder Gleitkomma, und die Art ihrer Genauigkeit, das heißt absolut oder relativ.

3. Verfahren nach Anspruch 1 oder 2, **dadurch gekennzeichnet, dass** der Konfigurator die Inbeziehungsetzung eines gelesenen Datenelements und eines geschriebenen Datenelements verifiziert.

4. Verfahren nach einem der vorhergehenden Ansprüche, **dadurch gekennzeichnet, dass** der Konfigurator für jedes Paar von Daten, die in Beziehung gesetzt werden sollen, die Kohärenz der Austauschmoden für das Schreiben und der für das Lesen vorgesehenen Austauschmoden verifiziert.

5. Verfahren nach einem der vorhergehenden Ansprüche, **dadurch gekennzeichnet, dass** der Konfigurator für jedes Paar von Daten, die in Beziehung gesetzt werden sollen und deren zwei Austauschmoden von zyklischer Art sind, die Kohärenz der Austauschperioden für das Schreiben und der für das Lesen vorgesehenen Austauschperioden verifiziert.

6. Verfahren nach einem der vorhergehenden Ansprüche, **dadurch gekennzeichnet, dass** der Konfigurator für jedes Paar von Daten, die in Beziehung gesetzt werden sollen und deren zwei Austauschmoden von zyklischer und kohärenter Art sind, die Kohärenz der Arten geschriebener und gelesener Daten verifiziert.

7. Verfahren nach einem der vorhergehenden Ansprüche, **dadurch gekennzeichnet, dass** der Konfigurator für jedes Paar von Daten in der Art von Zeichenketten, die in Beziehung gesetzt werden sollen und deren zwei Austauschmoden von zyklischer und kohärenter Art sind, die Kohärenz der Kettenlängen geschriebener und gelesener Daten verifiziert.

8. Verfahren nach einem der vorhergehenden Ansprüche, **dadurch gekennzeichnet, dass** der Konfigurator für jedes Paar von Daten analoger Art, die in Beziehung gesetzt werden sollen und deren zwei Austauschmoden von zyklischer und kohärenter Art sind, die Kohärenz der Systeme verifiziert, in denen die Einheiten der geschriebenen und gelesenen Daten ausgedrückt werden.

9. Verfahren nach einem der vorhergehenden Ansprüche, **dadurch gekennzeichnet, dass** der Konfigurator für jedes Paar von Daten analoger Art des gleichen Einheitensystems, die in Beziehung gesetzt werden sollen und deren zwei Austauschmoden von zyklischer und kohärenter Art sind, die Kohärenz der 10er-Potenzen der geschriebenen und gelesenen Daten verifiziert.

10. Verfahren nach einem der vorhergehenden Ansprüche, **dadurch gekennzeichnet, dass** der Konfigurator für jedes Paar von Daten analoger Art, des gleichen Einheitensystems und der gleichen 10er-Potenz, die in Beziehung gesetzt werden sollen und deren zwei Austauschmoden von zyklischer und kohärenter Art sind, die Kohärenz der Genauigkeit der geschriebenen und gelesenen Daten verifiziert.

11. Verfahren nach einem der vorhergehenden Ansprüche, **dadurch gekennzeichnet, dass** der Konfigurator für jedes Paar von Daten analoger Art, des gleichen Einheitensystems, der gleichen 10er-Potenz und der gleichen Genauigkeit, die in Beziehung gesetzt werden sollen und deren zwei Austauschmoden von zyklischer und kohärenter Art sind, die Kohärenz der minimalen und maximalen Werte der geschriebenen und gelesenen Daten verifiziert.

## Claims

1. Process for the configuration of a system structured around at least one digital network (2) and comprising at least one analogue intelligent component (4 to 7 and 9) or on-off intelligent component (10), **characterized in that** during the inclusion of a new or modified component, a configurator accesses the data characterizing all the values read and written on the network by this component in the physical sense relating to control/command, in addition to the data customarily transmitted over the digital network.

2. Process according to Claim 1, **characterized in that** the data which are accessed are: the frequency or the period of sampling of these values, and for the digital values corresponding to analogue quantities, the types of expression of these quantities, namely boolean or fixed-point or floating-point, and the nature of their precision, namely absolute or relative.

3. Process according to Claim 1 or 2, **characterized in that** the configurator verifies the inter-relation of a data item read and of a data item written.

4. Process according to one of the preceding claims, **characterized in that** the configurator, for each pair of data items that have to be inter-related, verifies the consistency of the modes of exchanges of writing and envisaged for reading.

5. Process according to one of the preceding claims, **characterized in that** the configurator, for each pair of data items that have to be inter-related and whose two modes of exchanges are of cyclic type, verifies the consistency of the periods of exchanges of writing and envisaged for reading.

6. Process according to one of the preceding claims, **characterized in that** the configurator, for each pair of data items that have to be inter-related and whose two modes of exchanges are of cyclic type and are consistent, verifies the consistency of the types of data items written and read.

7. Process according to one of the preceding claims, **characterized in that** the configurator, for each pair of data items of character string type that have to be inter-related and whose two modes of exchanges are of cyclic type and are consistent, verifies the consistency of the sizes of the strings of data items written and read.

8. Process according to one of the preceding claims, **characterized in that** the configurator, for each pair of data items of analogue type that have to be inter-related and whose two modes of exchanges are of cyclic and consistent type, verifies the consistency of the systems in which the units of the data items written and read are expressed.

9. Process according to one of the preceding claims, **characterized in that** the configurator, for each pair of data items of analogue type with the same system of units that have to be inter-related and whose two modes of exchanges are of cyclic and consistent type, verifies the consistency of the powers of 10 of the data items written and read.

10. Process according to one of the preceding claims, **characterized in that** the configurator, for each pair of data items of analogue type, with the same system of units and with the same power of 10 that have to be inter-related and whose two modes of exchanges are of cyclic type and are consistent, verifies the consistency of the precisions of the data items written and read.

11. Process according to one of the preceding claims, **characterized in that** the configurator, for each pair of data items of analogue type, with the same system of units, with the same power of 10 and with the same precision, which have to be inter-related and whose two modes of exchanges are of cyclic type and are consistent, verifies the consistency of the minimum and maximum values of the data items written and read.
